# EUROPÄISCHE PATENTSCHRIFT

(11) **EP 3 612 580 B1**
(45) Veröffentlichungstag und Bekanntmachung des Hinweises auf die Patenterteilung: **17.03.2021**
(21) Anmeldenummer: 18718448.6
(22) Anmeldetag: 18.04.2018
(51) Int. Cl.: C08G 18/48, C08G 18/66, C08G 18/72, C08G 18/73, C08G 18/08, C08G 18/32, C08G 18/42, C08G 18/44

(54) **ALIPHATISCHE THERMOPLASTISCHE POLYURETHANE, DEREN HERSTELLUNG UND VERWENDUNG**
ALIPHATIC THERMOPLASTIC POLYURETHANES, THEIR PREPARATION AND USE
POLYURÉTHANES THERMOPLASTIQUES ALIPHATIQUES, LEUR FABRICATION ET LEUR UTILISATION

(30) Priorität: 18.04.2017 EP 17166813
(43) Veröffentlichungstag der Anmeldung: 26.02.2020
(73) Patentinhaber: Covestro Intellectual Property GmbH & Co. KG, 51373 Leverkusen (DE)
(72) Erfinder: WAMPRECHT, Christian, 41472 Neuss (DE); IRLE, Christoph, 50672 Köln (DE)
(74) Vertreter: Levpat
(86) Internationale Anmeldenummer: PCT/EP2018/059821
(87) Internationale Veröffentlichungsnummer: WO 2018/192936

(56) Entgegenhaltungen:
- EP-A1- 1 153 951
- EP-A1- 1 854 818

## Beschreibung

Die vorliegende Erfindung betrifft aliphatische, lichtechte thermoplastische Polyurethane mit verbessertem Ausblühverhalten, guter thermischer Beständigkeit und schneller technischer Verarbeitbarkeit, deren Herstellung und Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z. B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie z. B. Polyester-, Polyether-, oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE 19 64 834 A1).

Der Aufbau der thermoplastischen Polyurethane kann entweder schrittweise (Prepolymerdosierverfahren) oder durch gleichzeitige Reaktion aller Reaktivkomponenten (one-shot-Dosierverfahren) erfolgen.

Bei der Herstellung von aliphatischen thermoplastischen Polyurethanen auf Basis von 1,6-Hexamethylendiisocyanat (HDI) werden zyklische Oligourethane gebildet, die durch ihr spezifisches Kristallisationsverhalten weniger verträglich mit der Polymermatrix sind und daher infolge Migration zur Bildung eines kreidenden, störenden Oberflächenbelags auf Werkstücken führen. Dieses Phänomen wird z. B. in DE 102 06 839 A1 beschrieben. Es hat sich gezeigt, dass Test-Lagerungen bei Raumtemperatur (100 Tage) oder 28 Tage bei 60 °C in einer mit Wasserdampf gesättigten Umgebung keine ausreichende Aussage über das Langzeitverhalten geben können. Aus diesem Grund werden zusätzlich beschleunigte Wasserlagerungstests durchgeführt, um das Ausblühverhalten über eine längere Zeitskala besser abschätzen zu können.

Zur Verbesserung des Ausblühverhaltens werden in EP 1 854 818 A1 spezielle Kettenverlängerer mit einem Molekulargewicht von 104 bis 500 g/mol eingesetzt. Diese Kettenverlängerer werden durch Reaktion von Diolen mit ε-Caprolacton erhalten. Vom Einsatz spezieller, langkettiger Diisocyanate wird abgeraten, weil HDI-basierte TPU aufgrund der guten Wärmestabilität, der guten mechanischen Eigenschaften und der schnellen Verfestigung nach der Verarbeitung besonders gut für die Herstellung von TPU-Teilen für lichtechte Anwendungen (z. B. Automobilbereich, Armbänder für Uhren und Fitness Tracker, Smartphonegehäuse usw.) geeignet sind.

Es hat sich jedoch gezeigt, dass das Verfestigungsverhalten von aliphatischen thermoplastischen Polyurethanen auf Basis von HDI bei Verwendung von oligomeren Kettenverlängererdiolen für heutige Anforderungen oftmals nicht mehr ausreicht, um die gewünschten schnellen Verarbeitungszyklen zu realisieren.

Aufgabe der vorliegenden Erfindung war es daher, neue aliphatischen thermoplastische Polyurethane zur Verfügung zu stellen, die ohne die Verwendung von oligomeren Kettenverlängererdiolen ein sehr gutes Ausblühverhalten aufweisen und durch ein verbessertes Verfestigungsverhalten schnellere Verarbeitungszyklen ermöglichen. Daneben sollen die sonstigen guten Eigenschaften von aliphatischen thermoplastischen Polyurethanen, wie z. B. sehr gute Lichtstabilität, angenehme Haptik und gute Verarbeitbarkeit, erhalten bleiben.

Diese Aufgabe konnte durch den Einsatz von langkettigen Diisocyanaten, auch in Abmischung mit anderen Diisocyanaten gelöst werden.

Langkettige Diisocyanate, wie z. B. 1,10-Diisocyanatodecan oder 1,12-Diisocyanatododecan sind zwar an sich bekannt, wurden jedoch bisher in thermoplastischen Polyurethanen nicht eingesetzt. Infolgedessen sind auch keine Eigenschaften von TPU auf Basis dieser langkettigen Diisocyanate bekannt.

1,10-Diisocyanatodecan und 1,12-Diisocyanatododecan werden als mögliche Einsatzkomponenten unter vielen anderen Diisocyanaten als Rohstoff bei der Herstellung von TPU genannt, z. B. in WO 2004/092241, WO 2005/005509, WO 2005/005697, EP 1 153 951 A1, EP 1 671 989 A2 und EP 1 674 494 A1. Es gibt in diesen Druckschriften keinerlei Hinweise auf irgendwelche Eigenschaften oder Angaben zu einem vorteilhaften Verarbeitungsverhalten der TPU auf Basis von langkettigen Diisocyanaten.

Gegenstand der vorliegenden Erfindung sind aliphatische, lichtstabile thermoplastische Polyurethane, die erhältlich sind aus
A) einer Isocyanatkomponente bestehend aus
   a1) 100 bis 70 Mol-% 1,10-Diisocyanatodecan und/oder 1,12-Diisocyanatododecan
   a2) 0-30 Mol-% eines oder mehrerer aliphatischer, cycloaliphatischer und/oder aromatischer Diisocyanate, ausgenommen 1,10-Diisocyanatodecan und 1,12-Diisocyanatododecan.
B) mindestens einer Polyolkomponente aus der Gruppe bestehend aus Polyesterpolyolen, Polyetherpolyolen, Polyetheresterpolyolen, Polycarbonatdiolen und Polyethercarbonatpolyolen jeweils mit einem zahlenmittleren Molekulargewicht von 500 bis 8000 g/mol,
C) mindestens einer Kettenverlängererkomponente ausgewählt aus der Gruppe bestehend aus Ethandiol, 1,2-Propandiol, 1,3-Propandiol, 1,3-Butandiol, 1,4-Butandiol, 1,5-Pentandiol, 3-Methyl-1,5-pentandiol, 1,6-Hexandiol, 1,8-Octandiol, 1,10-Decandiol, 1,2-Dodecandiol, 1,4-Cyclohexandiol, Bis-(hydroxymethyl)-cyclohexan, 1,4-Di(hydroxyethyl)-hydrochinon, Neopentylglykol, 1,4-Butendiol, Diethylenglykol, Triethylenglykol, Tetraethylenglykol, Dipropylenglykol, Tripropylenglykol, Dibutylenglykol, Terephthalsäure-bis-ethylenglykol, Terephthalsäure-bis-1,3-propandiol, Terephthalsäure-bis-1,4-butandiol, ethoxylierte Bisphenole, Ethylendiamin, 1,2-Propylendiamin, 1,3-Propylendiamin, N-Methyl-propylendiamin, N,N'-Dimethyl-ethylendiamin, Isophorondiamin, 2,4-Toluylendiamin, 2,6-Toluylendiamin, 3,5-Diethyl-2,4-toluylendiamin, 3,5-Diethyl-2,6-toluylendiamin, 2-Hydroxyethylamin,
D) gegebenenfalls monofunktionellen Kettenabbrechern
   in Gegenwart von
E) gegebenenfalls Katalysatoren,
F) 0,05 bis 5 Gew.-%, bezogen auf das thermoplastische Polyurethan, an Oxidations- und/ oder Lichtstabilisatoren,
G) gegebenenfalls weiteren Zusatzmitteln und/oder Hilfsstoffen,
wobei das Verhältnis der Isocyanatgruppen aus A) zu den gegenüber Isocyanatengruppen reaktiven Gruppen aus B), C) und D) 0,9:1 bis 1,1:1 beträgt.

Als organische Diisocyanate a2) kommen beispielsweise Diisocyanate in Betracht, wie sie in Justus Liebigs Annalen der Chemie, 562, S.75-136 beschrieben werden.

Im Einzelnen seien beispielhaft genannt:
Aliphatische und cycloaliphatische Diisocyanate, beispielsweise 1,6-Diisocyanatohexan, 1,8-Diisocyanatooctan, Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische und 4,4'-, 2,4'- und 2,2'-Dicyclohexylmethandiisocyanat sowie die entsprechenden Isomerengemische. Vorzugsweise verwendet wird als aliphatisches Diisocyanat 1,6-Diisocyanatohexan.

Aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden als aromatische organische Diisocyanate Diphenylmethandiisocyanat-Isomerengemische mit einem 4,4'-Diphenylmethandiisocyanatgehalt von >96 Gew.-% und insbesondere 4,4'-Diphenylmethandiisocyanat.

Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpoly methylenpolyisocyanaten.

Bevorzugt besteht das eingesetzte organische Diisocyanat a2) zu mindestens 50 Gew.-%, vorzugsweise 75 Gew.-% und besonders bevorzugt zu 100 Gew.-% aus 1,6-Diisocyanatohexan.

Als Komponente B) kommen lineare hydroxylterminierte Polyole mit einem zahlenmittleren Molekulargewicht Mₙ von 500 bis 8000 g/mol (OH-Zahl von 225 bis 14 mg KOH/g), vorzugsweise 750 bis 6000 g/mol und besonders bevorzugt 900 bis 4200 g/mol zum Einsatz. Produktionsbedingt enthalten diese oft geringe Mengen an nichtlinearen Verbindungen. Häufig spricht man daher auch von "im Wesentlichen linearen Polyolen". Bevorzugt sind Polyester-, Polyether-, Polyetherester-, Polycarbonat- und Polyethercarbonatdiole oder Gemische aus diesen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mₙ von 500 bis 8000 g/mol, vorzugsweise 750 bis 6000 g/mol und ganz besonders bevorzugt 1000 bis 4200 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Maleinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,2-Propylenglykol, Dipropylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol und 1,3-Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von cyclischen Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole besitzen ein zahlenmittleres Molekulargewicht Mₙ von 500 bis 8000g/mol, vorzugsweise 600 bis 6000 g/mol und besonders bevorzugt 800 bis 3000 g/mol und können einzeln oder in Form von Mischungen untereinander zur Anwendung kommen.

Geeignete Polycarbonatdiole können beispielsweise hergestellt werden durch Umsetzung von kurzkettigen Diolen, wie z. B. 1,4-Butandiol oder 1,6-Hexandiol mit Diphenylcarbonat oder Dimethylcarbonat unter Zuhilfenahme von Katalysatoren und Abspaltung von Phenol oder Methanol. Die Polycarbonatdiole besitzen ein zahlenmittleres Molekulargewicht von 500 bis 6000 g/mol, vorzugsweise 750 bis 4000 g/mol und besonders bevorzugt 800 bis 3000 g/mol.

Geeignete Polyethercarbonatdiole können beispielsweise hergestellt werden durch Umsetzung von kurzkettigen Polyetherdiolen, wie z. B. Polytetrahydrofuranen mit Molekulargewichten von 250 bis 1000 g/mol mit Diphenyl- oder Dimethylcarbonat unter Zuhilfenahme von Katalysatoren und Abspaltung von Phenol oder Methanol. Weiterhin können Polyethercarbonatdiole hergestellt werden durch Copolymerisation von Alkylenoxiden, wie z. B. Ethylenoxid oder Propylenoxid oder Gemischen davon, mit Kohlendioxid unter Zuhilfenahme von geeigneten Katalysatoren, wie z. B. Doppelmetallcyanidkatalysatoren. Die Polyethercarbonatdiole besitzen ein zahlenmittleres Molekulargewicht von 500 bis 8000 g/mol, vorzugsweise 750 bis 6000 g/mol und besonders bevorzugt 1000 bis 4200 g/mol.

Die OH-Gruppen in den vorher genannten Polyolen können in einem weiteren Reaktionsschritt zusätzlich noch mit ε-Caprolacton umgesetzt worden sein.

Die OH-Gruppen in den vorher genannten Polyolen können in einem weiteren Reaktionsschritt zusätzlich noch mit Ethylenoxid umgesetzt worden sein.

Als Kettenverlängerer C) können Diole, wie beispielsweise Ethandiol, 1,2-Propandiol, 1,3-Propandiol, 1,3-Butandiol, 1,4-Butandiol, 1,5-Pentandiol, 3-Methyl-1,5-pentandiol, 1,6-Hexandiol, 1,8-Octandiol, 1,10-Decandiol, 1,2-Dodecandiol, 1,4-Cyclohexandiol, Bis-(hydroxymethyl)-cyclohexan, 1,4-Di(hydroxyethyl)-hydrochinon, Neopentylglykol, 1,4-Butendiol, Diethylenglykol, Triethylenglykol, Tetraethylenglykol, Dipropylenglykol, Tripropylenglykol, Dibutylenglykol, Terephthalsäure-bis-ethylenglykol, Terephthalsäure-bis-1,3 -propandiol, Terephthalsäure-bis-1,4-butandiol, ethoxylierte Bisphenole, Diamine, wie beispielsweis Ethylendiamin, 1,2-Propylendiamin, 1,3-Propylendiamin, N-Methyl-propylendiamin, N,N'-Dimethyl-ethylendiamin, Isophorondiamin, 2,4-Toluylendiamin, 2,6-Toluylendiamin, 3,5-Diethyl-2,4-toluylendiamin, 3,5-Diethyl-2,6-toluylendiamin und Hydroxyamine, wie beispielsweise 2-Hydroxyethylamin eingesetzt werden.

Bevorzugte Kettenverlängerer sind Ethandiol, 1,2-Propandiol, 1,3-Propandiol, 1,3-Butandiol, 1,4-Butandiol, 1,5-Pentandiol, 1,6-Hexandiol, 1,8-Octandiol, 1,10-Decandiol, 1,2-Dodecandiol, 1,4-Cyclohexandiol, Bis-(hydroxymethyl)-cyclohexan, 1,4-Di(hydroxyethyl)-hydrochinon, Neopentylglykol, Diethylenglykol, Dipropylenglykol, Dibutylenglykol, Terephthalsäure-bis-ethylenglykol, Ethylendiamin, Isophorondiamin, 2,4-Toluylendiamin und 2-Hydroxyethylamin.

Besonders bevorzugt werden Ethandiol, 1,3-Propandiol, 1,4-Butandiol, 1,6-Hexandiol und 1,4-Di(-hydroxyethyl)-hydrochinon als Kettenverlängerer eingesetzt.

Daneben können auch kleinere Mengen an Triolen, beispielsweise Trimethylolpropan oder Glycerin, zugesetzt werden.

Geeignete Kettenabbrecher D) sind beispielsweise monofunktionlle Substanzen, die mit Isocyanatgruppen reagieren können, wie Alkohole oder Amine, wobei Alkohole bevorzugt sind. Genannt seien z. B. 1-Butanol, 1-Hexanol und 1-Octanol.

Geeignete Katalysatoren E) zur Herstellung der TPU sind die gemäß dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)ethanol, Diazabicyclo[2,2,2]octan sowie organische Metallverbindungen, wie Titansäureester, Eisenverbindungen oder Zinnverbindungen, wie beispielsweise Zinndiacetat, Zinndioctoat, Zinndilaurat oder die Zinndialkylsalze aliphatischer Carbonsäuren, wie beispielsweise Dibutylzinndiacetat oder Dibutylzinndilaurat. Bevorzugte Katalysatoren sind organische Metallverbindungen, insbesondere Titansäureester oder Eisen- und Zinnverbindungen.

Die Gesamtmenge an Katalysatoren bezogen auf das TPU beträgt in der Regel etwa 0 bis 5 Gew.-%, vorzugsweise 0,0001 bis 2 Gew.-% und besonders bevorzugt 0,0002 bis 1,0 Gew.-%.

Geeignete Oxidationsstabilisatoren F) sind beispielsweise organische Verbindungen mit sterisch gehinderten phenolischen Gruppierungen, wie z. B. Irganox® 1010 oder Irganox® 245 (Handelsprodukte der BASF SE) aber auch organische Phosphorverbindungen mit dreiwertigem Phosphor, wie z. B. Triphenylphosphin und Triphenylphosphit.

Geeignete Lichtschutzmittel F) sind beispielsweise UV-Absorber, wie z. B. Benzophenone, Benzotriazole, Oxanilide oder Phenyltriazine, aber auch sogenannte HALS-Verbindungen (Hindered Amine Light Stabilizer), beispielsweise 2,2,6,6-Tetramethylpiperidin-Derivate, wie Tinuvin® 622, Tinuvin® 765 und Chimassorb® 2020 (Handelsprodukte der BASF SE).

Geeignete Zusatzmittel und/oder Hilfsstoffe G) sind beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe, wie z. B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunder s und K.C. Frisch "High Polymers ", Band XVI, Polyurethane, Teil 1 und 2, Verlag Interscience Publishers 1962 bzw. 1964, dem Taschenbuch für Kunststoff-Additive von R. Gächter und H. Müller (Hanser Verlag München 1990) oder der DE 29 01 774 A zu entnehmen.

Ein weiterer Gegenstand der Erfindung ist ein Verfahren zur Herstellung der erfindungsgemäßen thermoplastischen Polyurethane, dadurch gekennzeichnet, dass
i) die Polyolkomponente B) und die Kettenverlängererkomponente C) kontinuierlich gemischt werden,
ii) das Gemisch aus Schritt i) mit der Isocyanatkomponente A) zur Reaktion gebracht wird,
iii) die Reaktion in einem Austragungsgefäß zu Ende geführt wird, und
   das Produkt gegebenenfalls granuliert wird,
wobei die Zugabe der Komponente F) an jedweder Stelle in den Schritten i) und ii) erfolgen kann.

Die Komponente F) kann, wie allgemein bekannt, entweder in der Komponente B) gelöst vorliegen, oder sie wird beispielsweise während oder nach der Reaktion der Komponenten A), B) und C) zugegeben.

Ein weiterer Gegenstand der Erfindung ist ein Verfahren zur Herstellung der erfindungsgemäßen thermoplastischen Polyurethane, dadurch gekennzeichnet, dass
i) die Isocyanatkomponente A) und die Polyolkomponente B) kontinuierlich gemischt und zur Reaktion gebracht werden,
ii) das entstandene Reaktionsprodukt aus Schritt i) mit der Kettenverlängererkomponente C) zur Reaktion gebracht wird,
iii) die Reaktion in einem Austragungsgefäß zu Ende geführt wird, und
   das Produkt gegebenenfalls granuliert wird,
wobei die Zugabe der Komponente F) an jedweder Stelle in den Schritten i) und ii) erfolgen kann.

Die Komponente F) kann, wie allgemein bekannt, entweder in der Komponente B) gelöst vorliegen, oder sie wird beispielsweise während oder nach der Reaktion der Komponenten A), B) und C) zugegeben.

Die Zugabe der Komponenten E), F) und G) kann während des Herstellprozesses des TPU erfolgen. Die Zugabe von F) und G) kann auch bei einem nachfolgenden Compoundierschritt erfolgen.

Die erfindungsgemäßen thermoplastischen Polyurethane können zur Herstellung von lichtstabilen Formteilen, insbesondere zur Herstellung von Extrudaten (z. B. Filme, Folien, Schläuche) und Spritzgießteilen eingesetzt werden. Durch ihre Eigenschaften sind sie besonders geeignet für Anwendungen, die dem Einfluss von UV-Licht ausgesetzt sind, z. B. im Automobilbereich, im Sport- und Freizeitbereich, in der Landwirtschaft und in sonstigen Außenanwendungen. Des Weiteren können die erfindungsgemäßen TPU als sinterfähiges Pulver zur Herstellung von Flächengebilden und Hohlkörpern verwendet werden.

Die Erfindung soll anhand der nachfolgenden Beispiele näher erläutert werden.

### Beispiele:

Im Folgenden verwendete Abkürzungen:
- PE225B:: Polybutylenadipat mit einer OH-Zahl von 50 mg KOH/g
- Acclaim® 2220N:: Polyether (C3/C2-Mischether) mit einer OH-Zahl von 50 mg KOH/g
- Desmophen® C2201:: Polycarbonatdiol mit einer OH-Zahl von 56 mg KOH/g
- HDI:: 1,6-Diisocyanatohexan
- HDO:: 1,6-Hexandiol
- DDI:: 1,10-Diisocyanatodecan
- T2000:: Polytetrahydrofuran mit einer OH-Zahl von 56 mg KOH/g
- Irganox® 245:: Antioxidant der BASF SE
- Tinuvin® 234:: Lichtstabilisator auf Basis eines Benztriazols der BASF SE
- Stabaxol® P200:: Hydrolyseschutzmittel der Rhein Chemie GmbH
- DBTL:: Dibutylzinndilaurat

### Allgemeine Beschreibung der Herstellung der TPUs:

Ein Gemisch aus dem jeweilige Poyol bzw. Polyolgemisch (im Falle von PE225B wurde dem Polyol noch 1 Gew% Stabaxol® P200 3 Stunden vor Versuchsbeginn zugesetzt), HDO, Irganox® 245 (0,5% Gew.-%) bezogen auf TPU), Tinuvin® 234 (0,2 Gew.-% bezogen auf TPU) und 80 ppm DBTL (bezogen auf die Polyolmenge) wurden unter Rühren auf 120 °C erwärmt. Danach wurde das jeweilige Diisocyanat zugegeben. Anschließend wurde bis zum maximal möglichen Viskositätsanstieg gerührt und die TPUs dann zu ein TPU-Gießplatten ausgegossen. Die Platten wurden danach 30 Minuten bei 80 °C thermisch nachbehandelt. Dann wurden sie auf Raumtemperatur abgekühlt. Die molaren Zusammensetzungen der hergestellten TPU sind in der Tabelle 1 aufgeführt.

**Tabelle 1: Molare Zusammensetzung der hergestellten TPU**

| Beispiel | PE225B [mol] | Acclaim 2220N [mol] | Desmophen C2201 [mol] | T2000 [mol] | HDO [mol] | DDI [mol] | HDI [mol] |
|---|---|---|---|---|---|---|---|
| 1 | 0,7 | 0,3 | - | - | 2,04 | 3,04 | - |
| 2* | 0,7 | 0,3 | - | - | 2,04 | - | 3,04 |
| 3 | - | - | 0,5 | 0,5 | 4,95 | 6,95 | - |
| 4* | - | - | 0,5 | 0,5 | 4,95 | - | 6,95 |

| | | | | | | | |
|---|---|---|---|---|---|---|---|
| * nicht erfindungsgemäß | | | | | | | |

Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm³/s zu Stäben (Formtemperatur: 40°C; Stabgröße: 80x10x4mm) bzw. Platten (Formtemperatur: 40°C; Größe: 125x50x2 mm) verarbeitet.

Von den hergestellten TPU Produkten wurden der Schmelzflussindex (MVR) und die mechanischen Werte (100% Modul, 300%-Modul, Reißfestigkeit, Reißdehnung und Shore A Härte), die Verfestigungsgeschwindigkeit, der Abrieb und das Ausblühverhalten ermittelt.

### Testbedingungen:

### 1) Schmelzflussindex (MVR):

Die MVR Messungen wurden bei 170°C (Beispiele 1 + 2) sowie 200 °C (Beispiele 3 + 4) mit 10 kg (98N) Auflagegewicht und 5 min. Vorheizzeit gemäß ISO 1133 mit einem MVR Gerät der Fa. Göttfert, Modell MP-D, gemessen.

### 2) Zugversuch:

Der Zugversuch erfolgte an S1-Stäben (entspricht Prüfkörper Typ 5 nach EN ISO 527, ausgestanzt aus Spritzplatten) gemäß DIN 53455 mit einer Zuggeschwindigkeit von 200 mm/min.

### 3) Härte:

Die Messung der Härte erfolgte nach DIN 53505.

### 4) Verfestigungsgeschwindigkeit:

Zur Ermittlung der Verfestigungsgeschwindigkeit wurde die Härteentwicklung von runden Formkörpern (Durchmesser 30 mm, Höhe 6 mm) nach der Spritzgießverarbeitung (Einstellung der Spritzgießmaschine: 25 s Kühlzeit und 25 s Nachdruckzeit) gemessen. Dabei wurde die Härte der Prüfkörper nach DIN 53505 sofort nach der Entnahme aus der Form (0 s), nach 60 s und nach 300 s gemessen.

### 5) Abrieb:

Die Messung des Abriebs erfolgte nach DIN ISO 4649

### 6) Ausblühverhalten:

Das Ausblühverhalten wurde an Spritzplatten bestimmt. Dazu wurden die Platten bei verschiedenen Bedingungen gelagert (bei 25 °C Umgebungsluft; bei 45 °C unter Wasser und bei 60 °C / 90% Luftfeuchtigkeit im Klimaschrank). Nach 4 Wochen Lagerzeit wurden die Prüfplatten visuell beurteilt.

Die gemessenen Werte für den Schmelzflussindex (MVR) und die des Zugversuchs (Mechanik) sind in der nachfolgenden Tabelle 2 aufgeführt.

**Tabelle 2:**

| TPU aus | MVR [ml/10 min.] | 100% Modul [MPa] | 300% Modul [Mpa] | Reißfestigkeit [Mpa] | Reißdehnung [%] | Shore A Härte |
|---|---|---|---|---|---|---|
| Beispiel 1 | 41,4 | 6,4 | 10,1 | 22,5 | 814 | 88 |
| Beispiel 2* | 90,1 | 5,7 | 9,0 | 21,5 | 863 | 85 |
| Beispiel 3 | 29,5 | 8,1 | - | 24,3 | 196 | 93 |
| Beispiel 4* | 6,4 | 7,9 | - | 25,6 | 128 | 93 |

| | | | | | | |
|---|---|---|---|---|---|---|
| *- nicht erfindungsgemäß | | | | | | |

Die gemessenen Werte für die Verfestigungsgeschwindigkeit und den Abrieb sind in der nachfolgenden Tabelle 3 aufgeführt.

**Tabelle 3:**

| TPU aus | Shore A Härte nach 0 s | Shore A Härte nach 60 s | Shore A Härte nach 300 s | Abrieb [mm³] |
|---|---|---|---|---|
| Beispiel 1 | 50 | 78 | 82 | 47 |
| Beispiel 2* | 31 | 73 | 79 | 70 |
| Beispiel 3 | 91 | 93 | 93 | 18 |
| Beispiel 4* | 81 | 90 | 93 | 36 |

| | | | | |
|---|---|---|---|---|
| *- nicht erfindungsgemäß | | | | |

Das Ausblühverhalten wurde an den Beispielen 1 und 2 bestimmt. Die visuellen Beurteilungen sind in der nachfolgenden Tabelle 4 aufgeführt

**Tabelle 4:**

| TPU aus | 25 °C Luft | 45 °C unter Wasser | 60 °C / 90% Luftfeuchtigkeit |
|---|---|---|---|
| Beispiel 1 | Kein Belag | Leichter Schleier | Leichter Schleier |
| Beispiel 2* | Kein Belag | Viel weißer Belag | Viel weißer Belag |

| | | | |
|---|---|---|---|
| *- nicht erfindungsgemäß | | | |

Die mechanischen Daten der TPU aus den Beispielen 1 bis 4 (Tabelle 2) liegen auf einem vergleichbaren Niveau. Die MVR-Werte sind unterschiedlich, was den verschiedenen Polymerzusammensetzungen geschuldet ist, aber nicht relevant für die Leistungsfähigkeit eines TPU ist.

Die Verfestigungsgeschwindigkeit und die Abriebwerte (Tabelle 3) zeigen deutliche Vorteile der erfindungsgemäßen TPU im Vergleich zu den nicht erfindungsgemäßen TPU auf. So sind die Abriebwerte in mm³ der erfindungsgemäßen TPU deutlich geringer als die Abriebwerte der nicht erfindungsgemäßen TPU. Die Verfestigungsgeschwindigkeit der erfindungsgemäßen TPU nach der Spritzgießverarbeitung ist schneller als die der nicht erfindungsgemäßen TPU, was man besonders an den höheren Shore A Härten nach 0 und 60 Sekunden (schnellerer Härteanstieg) deutlich erkennen kann.

Bei den Tests zur Ermittlung des Ausblühverhaltens ergeben sich deutliche Vorteile der erfindungsgemäßen TPU bei der Lagerung unter Wasser bei 45°C und bei der Lagerung im Klimaschrank bei 60°C und 90% Luftfeuchtigkeit. Bei 25°C an Umgebungsluft ist bei den getesteten Prüfplatten keine Belagsbildung zu erkennen.

## Patentansprüche

1. Aliphatische, lichtstabile thermoplastische Polyurethane erhältlich aus
A) einer Isocyanatkomponente bestehend aus
a1) 100 bis 70 Mol-% 1,10-Diisocyanatodecan und/oder 1,12-Diisocyanatododecan,
a2) 0 bis 30 Mol-% eines oder mehrerer aliphatischer, cycloaliphatischer und/oder aromatischer Diisocyanate, ausgenommen 1,10-Diisocyanatodecan und 1,12-Diisocyanatododecan,
B) mindestens einer Polyolkomponente aus der Gruppe bestehend aus Polyesterpolyolen, Polyetherpolyolen, Polyetheresterpolyolen, Polycarbonatpolyolen, Polyethercarbonatpolyolen mit jeweils zahlenmittleren Molekulargewichten von 500 bis 8000 g/mol,
C) mindestens einer Kettenverlängererkomponente ausgewählt aus der Gruppe bestehend aus Ethandiol, 1,2-Propandiol, 1,3-Propandiol, 1,3-Butandiol, 1,4-Butandiol, 1,5-Pentandiol, 3-Methyl-1,5-pentandiol, 1,6-Hexandiol, 1,8-Octandiol, 1,10-Decandiol, 1,2-Dodecandiol, 1,4-Cyclohexandiol, Bis-(hydroxymethyl)-cyclohexan, 1,4-Di(hydroxyethyl)-hydrochinon, Neopentylglykol, 1,4-Butendiol, Diethylenglykol, Triethylenglykol, Tetraethylenglykol, Dipropylenglykol, Tripropylenglykol, Dibutylenglykol, Terephthalsäure-bis-ethylenglykol, Terephthalsäure-bis-1,3-propandiol, Terephthalsäure-bis-1,4-butandiol, ethoxylierte Bisphenole, Ethylendiamin, 1,2-Propylendiamin, 1,3-Propylendiamin, N-Methyl-propylendiamin, N,N'-Dimethyl-ethylendiamin, Isophorondiamin, 2,4-Toluylendiamin, 2,6-Toluylendiamin, 3,5-Diethyl-2,4-toluylendiamin, 3,5-Diethyl-2,6-toluylendiamin, 2-Hydroxyethylamin,
D) gegebenenfalls monofunktionellen Kettenabbrechern
in Gegenwart von
E) gegebenenfalls Katalysatoren,
F) 0,05 bis 5 Gew.-%, bezogen auf das thermoplastische Polyurethan, an Oxidations- und/oder Lichtstabilisatoren,
G) gegebenenfalls weiteren Zusatzmitteln und/oder Hilfsstoffen,
wobei das Verhältnis der Isocyanatgruppen aus A) zu den gegenüber Isocyanatengruppen reaktiven Gruppen aus B), C) und D) 0,9:1 bis 1,1:1 beträgt.

2. Aliphatische, lichtechte thermoplastische Polyurethane gemäß Anspruch 1, **dadurch gekennzeichnet, dass**
die Isocyanatkomponente A) aus
a1) 100 bis 70 Mol-% 1,10-Diisocyanatodecan und/oder 1,12-Diisocyanatododecan,
a2) 0 bis 30 Mol-% eines oder mehrerer aliphatischer und/oder cycloaliphatischer Diisocyanate, ausgenommen 1,10-Diisocyanatodecan und 1,12-Diisocyanatododecan besteht.

3. Aliphatische, lichtechte thermoplastische Polyurethane gemäß Anspruch 1, **dadurch gekennzeichnet, dass**
die Isocyanatkomponente A) aus
a1) 100 bis 70 Mol-% 1,10-Diisocyanatodecan und/oder 1,12-Diisocyanatododecan,
a2) 0 bis 30 Mol-% eines oder mehrerer aliphatischer Diisocyanate, ausgenommen 1,10-Diisocyanatodecan und 1,12-Diisocyanatododecan besteht.

4. Aliphatische, lichtechte thermoplastische Polyurethane gemäß Anspruch 1, **dadurch gekennzeichnet, dass**
die Isocyanatkomponente A) aus
a1) 100 bis 70 Mol-% 1,10-Diisocyanatodecan und/oder 1,12-Diisocyanatododecan,
a2) 0-30 Mol-% 1,6-Diisocyanatohexan besteht.

5. Aliphatische, lichtechte thermoplastische Polyurethane gemäß Anspruch 1, **dadurch gekennzeichnet, dass**
die Polyole der Komponente B) jeweils zahlenmittlere Molekulargewichte von 750 bis 6000 g/mol aufweisen.

6. Aliphatische, lichtechte thermoplastische Polyurethane gemäß Anspruch 1, **dadurch gekennzeichnet, dass**
die Polyole der Komponente B) jeweils zahlenmittlere Molekulargewichte von 900 bis 4200 g/mol aufweisen.

7. Aliphatische, lichtechte thermoplastische Polyurethane gemäß Anspruch 1, **dadurch gekennzeichnet, dass**
in der Komponente C) ein oder mehrere Kettenverlängerer ausgewählt aus der Gruppe bestehend aus Ethandiol, 1,2-Propandiol, 1,3-Propandiol, 1,3-Butandiol, 1,4-Butandiol, 1,5-Pentandiol, 1,6-Hexandiol, 1,8-Octandiol, 1,10-Decandiol, 1,2-Dodecandiol, 1,4-Cyclohexandiol, Bis-(hydroxymethyl)-cyclohexan, 1,4-Di(hydroxyethyl)-hydrochinon, Neopentylglykol, Diethylenglykol, Dipropylenglykol, Dibutylenglykol, Terephthalsäure-bis-ethylenglykol, Ethylendiamin, Isophorondiamin, 2,4-Toluylendiamin und 2-Hydroxyethylamin eingesetzt werden.

8. Aliphatische, lichtechte thermoplastische Polyurethane gemäß Anspruch 1, **dadurch gekennzeichnet, dass**
in der Komponente C) ein oder mehrere Kettenverlängerer ausgewählt aus der Gruppe bestehend aus Ethandiol, 1,3-Propandiol, 1,4-Butandiol, 1,6-Hexandiol und 1,4-Di(-hydroxyethyl)-hydrochinon eingesetzt werden.

9. Verfahren zur kontinuierlichen Herstellung der aliphatischen, lichtechten thermoplastischen Polyurethane gemäß einem oder mehreren der Ansprüche 1 bis 8, **dadurch gekennzeichnet, dass**
i) die Polyolkomponente B) und die Kettenverlängererkomponente C) kontinuierlich gemischt werden,
ii) das Gemisch aus Schritt i) mit der Isocyanatkomponente A) zur Reaktion gebracht wird,
iii) die Reaktion in einem Austragungsgefäß zu Ende geführt wird, und das Produkt gegebenenfalls granuliert wird,
wobei die Zugabe der Komponente F) an jedweder Stelle in den Schritten i) und ii) erfolgen kann.

10. Verfahren zur kontinuierlichen Herstellung der aliphatischen, lichtechten thermoplastischen Polyurethane gemäß einem oder mehreren der Ansprüche 1 bis 8, **dadurch gekennzeichnet, dass**
i) die Isocyanatkomponente A) und die Polyolkomponente B) kontinuierlich gemischt und zur Reaktion gebracht werden,
ii) das entstandene Reaktionsprodukt aus Schritt i) mit der Kettenverlängererkomponente C) zur Reaktion gebracht wird,
iii) die Reaktion in einem Austragungsgefäß zu Ende geführt wird, und das Produkt gegebenenfalls granuliert wird,
wobei die Zugabe der Komponente F) an jedweder Stelle in den Schritten i) und ii) erfolgen kann.

11. Verwendung der aliphatischen, lichtechten thermoplastischen Polyurethane gemäß den Ansprüchen 1 bis 8 zur Herstellung von Extrudaten und Spritzgießteilen.

12. Verwendung der aliphatischen, lichtechten thermoplastischen Polyurethane gemäß den Ansprüchen 1 bis 8 als sinterfähiges Pulver zur Herstellung von Flächengebilden und Hohlkörpern.

13. Formkörper, Filme oder Folien erhältlich aus den thermoplastischen Polyurethanen gemäß einem der Ansprüche 1 bis 8.

14. Sinterpulver erhältlich aus den thermoplastischen Polyurethanen gemäß einem der Ansprüche 1 bis 8.

## Claims

1. Aliphatic, light-stable thermoplastic polyurethanes which are obtainable from
A) an isocyanate component consisting of
a1) from 100 to 70 mol% of 1,10-diisocyanatodecane and/or 1,12-diisocyanatododecane,
a2) from 0 to 30 mol% of one or more aliphatic, cycloaliphatic and/or aromatic diisocyanates with the exception of 1,10-diisocyanatodecane and 1,12-diisocyanatododecane,
B) at least one polyol component selected from the group consisting of polyester polyols, polyether polyols, polyether ester polyols, polycarbonate polyols and polyether carbonate polyols in each case having number average molecular weights of from 500 to 8000 g/mol,
C) at least one chain extender component, selected from the group consisting of ethanediol, 1,2-propanediol, 1,3-propanediol, 1,3-butanediol, 1,4-butanediol, 1,5-pentanediol, 3-methyl-1,5-pentanediol, 1,6-hexanediol, 1,8-octanediol, 1,10-decanediol, 1,2-dodecanediol, 1,4-cyclohexanediol, bis(hydroxymethyl)cyclohexane, 1,4-di(hydroxyethyl)hydroquinone, neopentyl glycol, 1,4-butenediol, diethylene glycol, triethylene glycol, tetraethylene glycol, dipropylene glycol, tripropylene glycol, dibutylene glycol, bis(ethylene glycol) terephthalate, bis(1,3-propanediol) terephthalate, bis(1,4-butanediol) terephthalate, ethoxylated bisphenols, ethylenediamine, 1,2-propylenediamine, 1,3-propylenediamine, N-methylpropylenediamine, N,N'-dimethylethylenediamine, isophoronediamine, 2,4-toluylenediamine, 2,6-toluylenediamine, 3,5-diethyl-2,4-toluylenediamine, 3,5-diethyl-2,6-toluylenediamine, 2-hydroxyethylamine,
D) optionally monofunctional chain terminators
in the presence of
E) optionally catalysts,
F) from 0.05 to 5% by weight, based on the thermoplastic polyurethane, of oxidation and/or light stabilizers,
G) optionally further additives and/or auxiliaries,
where the ratio of the isocyanate groups from A) to the groups which are reactive toward isocyanate groups from B), C) and D) is from 0.9:1 to 1.1:1.

2. Aliphatic, lightfast thermoplastic polyurethanes according to Claim 1, **characterized in that** the isocyanate component A) consists of
a1) from 100 to 70 mol% of 1,10-diisocyanatodecane and/or 1,12-diisocyanatododecane,
a2) from 0 to 30 mol% of one or more aliphatic and/or cycloaliphatic diisocyanates, with the exception of 1,10-diisocyanatodecane and 1,12-diisocyanatododecane.

3. Aliphatic, lightfast thermoplastic polyurethanes according to Claim 1, **characterized in that** the isocyanate component A) consists of
a1) from 100 to 70 mol% of 1,10-diisocyanatodecane and/or 1,12-diisocyanatododecane,
a2) from 0 to 30 mol% of one or more aliphatic diisocyanates, with the exception of 1,10-diisocyanatodecane and 1,12-diisocyanatododecane.

4. Aliphatic, lightfast thermoplastic polyurethanes according to Claim 1, **characterized in that** the isocyanate component A) consists of
a1) from 100 to 70 mol% of 1,10-diisocyanatodecane and/or 1,12-diisocyanatododecane,
a2) 0-30 mol% of 1,6-diisocyanatohexane.

5. Aliphatic, lightfast thermoplastic polyurethanes according to Claim 1, **characterized in that** the polyols of component B) each have number average molecular weights of from 750 to 6000 g/mol.

6. Aliphatic, lightfast thermoplastic polyurethanes according to Claim 1, **characterized in that** the polyols of component B) each have number average molecular weights of from 900 to 4200 g/mol.

7. Aliphatic, lightfast thermoplastic polyurethanes according to Claim 1, **characterized in that** one or more chain extenders selected from the group consisting of ethanediol, 1,2-propanediol, 1,3-propanediol, 1,3-butanediol, 1,4-butanediol, 1,5-pentanediol, 1,6-hexanediol, 1,8-octanediol, 1,10-decanediol, 1,2-dodecanediol, 1,4-cyclohexanediol, bis(hydroxymethyl)cyclohexane, 1,4-di(hydroxyethyl)hydroquinone, neopentyl glycol, diethylene glycol, dipropylene glycol, dibutylene glycol, bis(ethylene glycol) terephthalate, ethylenediamine, isophoronediamine, 2,4-toluylenediamine and 2-hydroxyethylamine are used in the component C).

8. Aliphatic, lightfast thermoplastic polyurethanes according to Claim 1, **characterized in that** one or more chain extenders selected from the group consisting of ethanediol, 1,3-propanediol, 1,4-butanediol, 1,6-hexanediol and 1,4-di(hydroxyethyl)hydroquinone are used in the component C).

9. Process for the continuous preparation of the aliphatic, lightfast thermoplastic polyurethanes according to one or more of Claims 1 to 8, **characterized in that**
i) the polyol component B) and the chain extender component C) are continuously mixed,
ii) the mixture from step i) is reacted with the isocyanate component A),
iii) the reaction is completed in a discharge vessel, and the product is optionally pelletized,
with the addition of the component F) being able to be carried out at any point in steps i) and ii).

10. Process for the continuous preparation of the aliphatic, lightfast thermoplastic polyurethanes according to one or more of Claims 1 to 8, **characterized in that**
i) the isocyanate component A) and the polyol component B) are continuously mixed and reacted,
ii) the resulting reaction product from step i) is reacted with the chain extender component C),
iii) the reaction is completed in a discharge vessel, and the product is optionally pelletized,
with the addition of the component F) being able to be carried out at any point in steps i) and ii).

11. Use of the aliphatic, lightfast thermoplastic polyurethanes according to any of Claims 1 to 8 for producing extrudates and injection-moulded parts.

12. Use of the aliphatic, lightfast thermoplastic polyurethanes according to any of Claims 1 to 8 as sinterable powder for producing sheet-like structures and hollow bodies.

13. Mouldings, films or sheets obtainable from the thermoplastic polyurethanes according to any of Claims 1 to 8.

14. Sinterable powder obtainable from the thermoplastic polyurethanes according to any of Claims 1 to 8.

## Revendications

1. Polyuréthanes thermoplastiques stables à la lumière, aliphatiques qui peuvent être obtenus à partir
A) d'un composant de type isocyanate constitué de
a1) 100 à 70 % en moles de 1,10-diisocyanatodécane et/ou de 1,12-diisocyanatododécane,
a2) 0 à 30 % en moles d'un ou plusieurs diisocyanates aliphatiques, cycloaliphatiques et/ou aromatiques, à l'exception du 1,10-diisocyanatodécane et du 1,12-diisocyanatododécane,
B) d'au moins un composant de polyol du groupe constitué par des polyesterpolyols, des polyétherpolyols, des polyétheresterpolyols, des polycarbonatepolyols, des polyéthercarbonatepolyols dotés à chaque fois de poids moléculaires moyens en nombre de 500 à 8 000 g/mole,
C) d'au moins un composant de type extenseur de chaînes du groupe constitué par l'éthanediol, le 1,2-propanediol, le 1,3-propanediol, le 1,3-butanediol, le 1,4-butanediol, le 1,5-pentanediol, le 3-méthyl-1,5-pentanediol, le 1,6-hexanediol, le 1,8-octanediol, le 1,10-décanediol, le 1,2-dodécanediol, le 1,4-cyclohexanediol, le bis-(hydroxyméthyl)-cyclohexane, la 1,4-di(hydroxyéthyl)-hydroquinone, le néopentylglycol, le 1,4-butènediol, le diéthylèneglycol, le triéthylèneglycol, le tétraéthylèneglycol, le dipropylèneglycol, le tripropylèneglycol, le dibutylèneglycol, l'acide téréphtalique-bis-éthylèneglycol, l'acide téréphtalique-bis-1,3-propanediol, l'acide téréphtalique-bis-1,4-butanediol, des bisphénols éthoxylés, l'éthylènediamine, la 1,2-propylènediamine, la 1,3-propylènediamine, la N-méthyl-propylènediamine, la N,N'-diméthyléthylènediamine, l'isophoronediamine, la 2,4-toluylènediamine, la 2,6-toluylènediamine, la 3,5-diéthyl-2,4-toluylènediamine, la 3,5-diéthyl-2,6-toluylènediamine, la 2-hydroxyéthylamine,
D) éventuellement des agents monofonctionnels de terminaison de chaîne
en présence
E) éventuellement de catalyseurs,
F) 0,05 à 5 % en poids, par rapport au polyuréthane thermoplastique, de stabilisateurs d'oxydation et/ou d'agents photostabilisants,
G) éventuellement d'autres additifs et/ou auxiliaires,
le rapport des groupes isocyanate de A) sur les groupes réactifs envers des groupes isocyanate de B), C) et D) étant de 0,9 : 1 à 1,1 : 1.

2. Polyuréthanes thermoplastiques stables à la lumière, aliphatiques selon la revendication 1, **caractérisés en ce que** le composant de type isocyanate A) est constitué de
a1) 100 à 70 % en moles de 1,10-diisocyanatodécane et/ou de 1,12-diisocyanatododécane,
a2) 0 à 30 % en moles d'un ou plusieurs diisocyanates aliphatiques et/ou cycloaliphatiques, à l'exception du 1,10-diisocyanatodécane et du 1,12-diisocyanatododécane.

3. Polyuréthanes thermoplastiques stables à la lumière, aliphatiques selon la revendication 1, **caractérisés en ce que** le composant de type isocyanate A) est constitué de
a1) 100 à 70 % en moles de 1,10-diisocyanatodécane et/ou de 1,12-diisocyanatododécane,
a2) 0 à 30 % en moles d'un ou plusieurs diisocyanates aliphatiques, à l'exception du 1,10-diisocyanatodécane et du 1,12-diisocyanatododécane.

4. Polyuréthanes thermoplastiques stables à la lumière, aliphatiques selon la revendication 1, **caractérisés en ce que** le composant de type isocyanate A) est constitué de
a1) 100 à 70 % en moles de 1,10-diisocyanatodécane et/ou de 1,12-diisocyanatododécane,
a2) 0 à 30 % en moles de 1,6-diisocyanatohexane.

5. Polyuréthanes thermoplastiques stables à la lumière, aliphatiques selon la revendication 1, **caractérisés en ce que**
les polyols du composant B) présentent à chaque fois des poids moléculaires moyens en nombre de 750 à 6 000 g/mole.

6. Polyuréthanes thermoplastiques stables à la lumière, aliphatiques selon la revendication 1, **caractérisés en ce que**
les polyols du composant B) présentent à chaque fois des poids moléculaires moyens en nombre de 900 à 4 200 g/mole.

7. Polyuréthanes thermoplastiques stables à la lumière, aliphatiques selon la revendication 1, **caractérisés en ce que**
dans le composant C), un ou plusieurs extenseurs de chaînes choisis dans le groupe constitué par l'éthanediol, le 1,2-propanediol, le 1,3-propanediol, le 1,3-butanediol, le 1,4-butanediol, le 1,5-pentanediol, le 1,6-hexanediol, le 1,8-octanediol, le 1,10-décanediol, le 1,2-dodécanediol, le 1,4-cyclohexanediol, le bis-(hydroxyméthyl)-cyclohexane, la 1,4-di(hydroxyéthyl)-hydroquinone, le néopentylglycol, le diéthylèneglycol, le dipropylèneglycol, le dibutylèneglycol, l'acide téréphtalique-bis-éthylèneglycol, l'éthylènediamine, l'isophoronediamine, la 2,4-toluylènediamine et la 2-hydroxyéthylamine sont utilisés.

8. Polyuréthanes thermoplastiques stables à la lumière, aliphatiques selon la revendication 1, **caractérisés en ce que**
dans le composant C), un ou plusieurs extenseurs de chaînes choisis dans le groupe constitué par l'éthanediol, le 1,3-propanediol, le 1,4-butanediol, le 1,6-hexanediol et la 1,4-di(hydroxyéthyl)-hydroquinone sont utilisés.

9. Procédé pour la préparation de manière continue des polyuréthanes thermoplastiques stables à la lumière, aliphatiques selon l'une ou plusieurs des revendications 1 à 8, **caractérisé en ce que**
i) le composant de type polyol B) et le composant de type extenseur de chaînes C) sont mélangés de manière continue,
ii) le mélange de l'étape i) est mis en réaction avec le composant de type isocyanate A),
iii) la réaction est conduite à son terme dans un récipient de décharge, et le produit est éventuellement granulé,
l'ajout du composant F) pouvant être réalisé à un endroit quelconque dans les étapes i) et ii).

10. Procédé pour la préparation de manière continue des polyuréthanes thermoplastiques stables à la lumière, aliphatiques selon l'une ou plusieurs des revendications 1 à 8, **caractérisé en ce que**
i) le composant de type isocyanate A) et le composant de type polyol B) sont mélangés et mis en réaction de manière continue,
ii) le produit de réaction résultant de l'étape i) est mis en réaction avec le composant de type extenseur de chaînes C),
iii) la réaction est conduite à son terme dans un récipient de décharge, et le produit est éventuellement granulé,
l'ajout du composant F) pouvant être réalisé à un endroit quelconque dans les étapes i) et ii).

11. Utilisation des polyuréthanes thermoplastiques stables à la lumière, aliphatiques selon les revendications 1 à 8 pour la préparation d'extrudats et de pièces moulées par injection.

12. Utilisation des polyuréthanes thermoplastiques stables à la lumière, aliphatiques selon les revendications 1 à 8 en tant que poudre pouvant être frittée pour la préparation de structures planes et de corps creux.

13. Corps moulés, films ou feuilles pouvant être obtenu(e)s à partir des polyuréthanes thermoplastiques selon l'une quelconque des revendications 1 à 8.

14. Poudre pour frittage pouvant être obtenue à partir des polyuréthanes thermoplastiques selon l'une quelconque des revendications 1 à 8.
